# DEMANDE DE BREVET EUROPEEN

(11) **EP 3 473 335 A1**
(43) Date de publication de la demande: **24.04.2019**
(21) Numéro de dépôt: 18200256.8
(22) Date de dépôt: 12.10.2018
(51) Int. Cl.: B01J 8/00, B01J 19/32, B01J 8/02

(54) **PANIER AMOVIBLE POUR REACTEUR CATALYTIQUE**

(30) Priorité: 18.10.2017 FR 1759796
(71) Demandeur: IFP Energies nouvelles, 92852 Rueil-Malmaison Cedex (FR)
(72) Inventeur: WEISS, Wilfried, 38540 VALENCIN (FR); PLAIS, Cecile, 69420 LES HAIES (FR)
(74) Mandataire: IFP Energies nouvelles

(57) **Abrégé**

La présente invention concerne un panier amovible pour réacteur catalytique comprenant un fond (1) horizontal et une pluralité de parois latérales (2) verticales et/ou au moins une paroi latérale ellipsoïdale, et une pluralité de cheminées (3, 4) verticales et ouvertes à leurs extrémités inférieures (5) et supérieures (6), chaque cheminée comprenant une partie inférieure (7) comprenant l'extrémité inférieure fixée sur le fond et s'étendant entre les parois latérales, dans lequel une première cheminée comprend une partie supérieure (8) s'étendant au-dessus des parois latérales, et la partie supérieure de la première cheminée est adaptée à être introduite dans une partie inférieure d'une cheminée d'un autre panier amovible. La présente invention concerne également un dispositif de filtration et de distribution comprenant ledit panier amovible, un réacteur comprenant ledit dispositif, et un procédé d'hydrotraitement et/ou d'hydrocraquage utilisant ledit réacteur.

## Description

La présente description concerne des paniers amovibles pour la filtration et la distribution de gaz et de liquide dans des réacteurs chimiques fonctionnant à co-courant descendant de gaz et de liquide.

On rencontre de tels réacteurs dans le domaine du raffinage, tel que pour les hydrotraitements qui nécessitent des flux d'hydrogène sous pression élevée et travaillant avec des charges liquides lourdes pouvant contenir des impuretés constituées de particules solides colmatantes.

Dans certains cas en effet, la charge liquide, voire le mélange de la charge liquide et d'un gaz riche en hydrogène dans des conditions de température et de pression nécessaires à l'hydrotraitement, contient des impuretés qui peuvent se déposer sur le lit catalytique lui-même et, au fil du temps, réduire le volume interstitiel de ce lit catalytique et ainsi conduire à une augmentation progressive de la perte de charge. Dans des cas extrêmes, notamment en fin de cycle, on observe un bouchage du lit catalytique qui se traduit par une montée de la perte de charge très rapide, perturbant ainsi l'écoulement au travers du réacteur.

La perte de charge peut devenir telle que l'exploitant soit obligé d'arrêter le réacteur et de remplacer une partie ou la totalité du catalyseur, ce qui entraîne bien sûr une réduction considérable des durées de cycles du procédé.

Parmi les charges colmatantes, on peut citer les mélanges d'hydrocarbures pouvant contenir une proportion non négligeable de composés insaturés ou polyinsaturés acétyléniques ou diéniques, ou une combinaison de ces différents composés, la proportion totale de composés insaturés pouvant aller jusqu'à 90% poids dans la charge. On peut citer à titre d'exemple représentatif des charges concernées par la présente description l'essence de pyrolyse, la pyrolyse désignant un procédé de craquage thermique bien connu de l'homme du métier. On peut également citer les coupes lourdes d'hydrocarbures, notamment les gazoles, les gazoles sous vide, les résidus atmosphériques ou les résidus sous vide, et les huiles désasphaltées. Ces coupes lourdes peuvent être issues d'une distillation directe de pétrole brut ou issues de procédés de conversion tels que la viscoréduction, la cokéfaction, le déasphaltage, le craquage catalytique ou l'hydrocraquage.

Les coupes lourdes d'hydrocarbures citées précédemment peuvent également contenir diverses impuretés, notamment des sédiments (e.g. mesurés par IP 375 et 390), des métaux (e.g. Ni, V, Fe, Ca...) et leurs dérivés tels que des dérivés de fer ou de calcium qui peuvent contribuer au colmatage des lits catalytiques. Il peut également se former des impuretés supplémentaires dans la charge lors de la mise en contact de la charge avec de l'hydrogène. Par exemple, du sulfure de Fe peut se former in situ à partir du Fe (e.g. minéral ou organique de type naphténate) contenu dans la charge. Les coupes de type résidus contiennent également des asphaltènes qui sont des composés chimiques souvent décrits comme précurseurs de coke.

Le bouchage d'une partie du lit catalytique peut être dû à plusieurs mécanismes. Directement, la présence de particules dans le flux de la charge peut entraîner un bouchage par dépôt desdites particules au sein du lit catalytique, ce dépôt ayant pour effet de réduire la fraction de vide. Indirectement, la formation d'une couche de produits issus des réactions chimiques, typiquement le coke, mais éventuellement d'autres produits solides dérivés des impuretés présentes dans la charge, produits qui se déposent à la surface des grains de catalyseur, peut également contribuer à la réduction de la fraction vide du lit catalytique.

De plus, le dépôt des particules colmatantes pouvant se faire au sein du lit catalytique de manière plus ou moins aléatoire, il peut en résulter des hétérogénéités dans la répartition de la fraction vide de ce lit catalytique qui vont se traduire par la création de chemins préférentiels. Ces chemins préférentiels sont extrêmement préjudiciables sur le plan hydrodynamique puisqu'ils perturbent plus ou moins gravement l'homogénéité de l'écoulement des phases au sein du lit catalytique et peuvent conduire à des hétérogénéités au niveau de l'avancement de la réaction chimique, ainsi que sur le plan thermique (différence de température radiale, point chaud par exemple).

### Etat de l'art

Pour prévenir le colmatage prématuré du lit catalytique, différentes solutions techniques ont été développées. Ces solutions sont fondées sur l'utilisation d'un système de filtration disposé en amont du lit catalytique (dans le sens d'écoulement des fluides). Par exemple, on peut citer les documents suivants.

Le document FR 2 889 973 décrit un plateau distributeur supportant directement un média filtrant et assurant ainsi à la fois les fonctions de filtration vis à vis du lit catalytique placé en aval et de distribution du gaz et du liquide. Le plateau distributeur filtrant selon FR 2 889 973 comporte des cheminées présentant des trous perforés (ou des fentes) au milieu du lit de filtration, ce qui peut poser des difficultés dans le cas d'un bouchage du lit de filtration à proximité des trous. Ce bouchage du lit de filtration entrainerait le bouchage de la cheminée avec deux conséquences : un déséquilibre de la distribution du débit liquide sous le plateau distributeur, et un risque d'endommagement des cheminées lors du démontage du plateau distributeur avec des cheminées collées et agrégées au lit de filtration.

Le document FR 2 959 677 décrit un ensemble de paniers amovibles contenant des particules de filtration, ces paniers étant déposés sur le plateau distributeur afin de faciliter le montage/démontage du dispositif de filtration sans intervenir sur le plateau distributeur. Pour assurer une intégrité mécanique du système de paniers, lesdits paniers amovibles sont maintenus solidaires par boulonnage ou par un système d'agrafe compliquant ainsi les opérations de montage et démontage.

Le document FR 2 996 465 décrit un ensemble de filtration et de distribution d'un gaz et d'un liquide comprenant un plateau distributeur muni de cheminées de distribution et un support de filtration perforé supérieur, sur lequel est disposé un lit de filtration, qui est traversé par les cheminées du plateau distributeur. Le support de filtration est maintenu mécaniquement au plateau distributeur au moyen d'une pièce coudée placée entre ledit support et le plateau distributeur ou par un système de vissage. La principale difficulté de mise en oeuvre de ce système réside dans le remplissage du média filtrant qui doit se faire une fois que le support est mis en place dans le réacteur et surtout lors du démontage du système qui suppose une vidange du support au préalable depuis l'intérieur du réacteur, rendu d'autant plus difficile en cas d'agglomération (ou prise en masse) du média filtrant.

Le document FR 3 043 339 décrit un ensemble de filtration et de distribution comprenant un plateau distributeur sur lequel sont fixées des cheminées et sur lequel sont posés des paniers de filtration, chaque panier étant pourvu d'un moyen de support coopérant avec une cheminée du plateau distributeur pour soutenir le panier de filtration. Cependant, ce système ne comporte qu'une épaisseur limitée de média filtrant et a donc une durée de vie de la fonction filtrante limitée.

La présente description a pour objet de remédier aux déficiences mentionnées ci-dessus.

### Résumé

Un premier objet de la présente description est de fournir des paniers amovibles empilables, permettant notamment la superposition de plusieurs lits de filtration et une meilleure utilisation de l'espace situé sous le fond supérieur du réacteur. Un deuxième objet de la présente description est l'allongement de la durée de vie du lit catalytique situé en aval du plateau distributeur.

Selon un premier aspect, les objets précités, ainsi que d'autres avantages, sont obtenus par un panier amovible adapté à contenir et retenir au moins un média filtrant pour filtration et distribution d'une phase gazeuse et d'une phase liquide, et adapté à être disposé en amont d'un lit catalytique fixe d'un réacteur fonctionnant à co-courant descendant de gaz et de liquide, ledit panier amovible comprenant :
un fond sensiblement horizontal et une pluralité de parois latérales sensiblement verticales et/ou au moins une paroi latérale (sensiblement verticale) ellipsoïdale, le fond et/ou au moins une paroi latérale étant perméable au gaz et au liquide ; et
une pluralité de cheminées sensiblement verticales et ouvertes à leurs extrémités inférieures et supérieures, chaque cheminée comprenant une partie inférieure comprenant l'extrémité inférieure fixée sur le fond et s'étendant entre les parois latérales, et une première cheminée du panier amovible comprenant une partie supérieure s'étendant au-dessus des parois latérales, et
dans lequel
la partie supérieure de la première cheminée est adaptée à être introduite dans une partie inférieure d'une cheminée d'un autre panier amovible du même type, (e.g. dans une deuxième cheminée d'un panier amovible selon le premier aspect).

La première cheminée du panier amovible pouvant être introduite dans une cheminée d'un autre panier amovible, cette première cheminée peut assurer une fonction de guidage lors de l'empilage des paniers amovibles. Il est ainsi possible de superposer plusieurs couches de paniers amovibles en amont d'un lit catalytique du réacteur, tel que dans l'espace sous le fond supérieur du réacteur. De plus, étant donné que les risques de bouchage de lit de filtration concernent principalement les paniers amovibles disposés au niveau des couches supérieures, les paniers amovibles colmatés restent accessibles pour leur remplacement sans devoir recourir au démontage de paniers supplémentaires. Au demeurant, le bouchage d'un panier induit la redistribution des fluides dans les paniers en aval sans mettre en péril la fonction de filtration dans son ensemble. La première cheminée peut également assurer une fonction de renfort structurel lors de l'empilage et la formation des couches de paniers amovibles.

L'écoulement des fluides en cas de bouchage d'un lit de filtration est également amélioré étant donné que les paniers amovibles sont pourvus de cheminées. Ainsi, la distribution du gaz dans la partie centrale du réacteur est augmentée, améliorant l'homogénéité de l'écoulement des phases au sein du lit catalytique. De plus, si un lit de filtration venait à se boucher, le liquide pourrait remonter le long des parois du panier amovible puis déborder par l'extérieur du panier amovible dans l'espace entre deux paniers amovibles, et/ou s'écouler dans un panier amovible adjacent, et/ou s'écouler avec le gaz dans une cheminée du panier amovible, préservant ainsi un équilibre de la distribution des fluides sous le plateau distributeur. Selon un ou plusieurs modes de réalisation, une partie du liquide peut également déborder par l'extérieur dans l'espace annulaire entre les paniers amovibles et la paroi du réacteur.

Selon un ou plusieurs modes de réalisation, la hauteur de la partie supérieure de la première cheminée est plus petite ou égale à la hauteur de la partie inférieure d'une deuxième cheminée du panier amovible. Ainsi, un premier panier amovible peut être disposé sur un deuxième panier amovible de sorte que le fond du premier panier amovible repose sur les parois latérales du deuxième panier amovible.

Selon un ou plusieurs modes de réalisation, les cheminées (e.g. les parties inférieures et supérieures des cheminées) forment des tubes à sections circulaires, et le diamètre de la partie inférieure d'une deuxième cheminée du panier amovible est supérieur au diamètre de la partie supérieure de la première cheminée. Ainsi, les étapes de fabrication des cheminées sont réduites et l'écoulement du gaz est optimisé. Il est entendu que les cheminées du panier amovible peuvent être de toute forme dès lors que les parties supérieures des cheminées du panier amovible sont adaptées à être introduites dans les parties inférieures des cheminées d'un autre panier amovible selon le premier aspect.

Selon un ou plusieurs modes de réalisation, le panier amovible comprend en outre une deuxième cheminée comprenant une partie supérieure s'étendant au-dessus des parois latérales, et dans lequel la partie supérieure de la deuxième cheminée est adaptée à être introduite dans une partie inférieure d'une cheminée d'un autre panier amovible (e.g. dans une première cheminée d'un panier amovible selon le premier aspect). La deuxième cheminée du panier amovible s'étendant également au-dessus des parois, le guidage pour la superposition des paniers ainsi que l'intégrité structurelle de l'ensemble formé par les couches des paniers amovibles sont améliorés.

Selon un ou plusieurs modes de réalisation, la hauteur de la partie supérieure de la deuxième cheminée est plus petite ou égale à la hauteur de la partie inférieure de la première cheminée.

Selon un ou plusieurs modes de réalisation, le diamètre de la partie inférieure de la première cheminée est supérieur au diamètre de la partie supérieure de la deuxième cheminée.

Selon un ou plusieurs modes de réalisation, le panier amovible comprend au moins trois parois latérales sensiblement verticales. Ainsi, les paniers peuvent être en forme de prisme triangulaire, parallélépipède rectangle (e.g. carré), prisme hexagonal, etc. Selon un ou plusieurs modes de réalisation, les trois parois latérales forment un prisme triangulaire. Selon un ou plusieurs modes de réalisation, le panier amovible comprend quatre parois latérales sensiblement verticales. Selon un ou plusieurs modes de réalisation, les quatre parois latérales forment un parallélépipède rectangle (e.g. carré). Selon un ou plusieurs modes de réalisation, le panier amovible comprend six parois latérales sensiblement verticales. Selon un ou plusieurs modes de réalisation, les six parois latérales forment un prisme hexagonal. Selon un ou plusieurs modes de réalisation, la paroi latérale (sensiblement verticale) ellipsoïdale forme un cylindre circulaire.

Selon un ou plusieurs modes de réalisation, le panier amovible comprend quatre parois latérales sensiblement verticales formant un parallélépipède rectangle comprenant une cavité consistant en deux parallélépipèdes rectangles à base carré adjacents, chacune des premières et deuxièmes cheminées étant disposée au centre d'un des parallélépipèdes rectangles à base carré. Ainsi, les paniers amovibles d'une couche peuvent être disposés selon une configuration perpendiculaire à celle des paniers amovibles d'une couche adjacente tout en réduisant fortement l'espace laissé libre entre les paniers amovibles. Selon un ou plusieurs modes de réalisation, les deux premières parois latérales opposées sont de largeur sensiblement égale au double de la largeur des deux autres parois latérales pour ainsi former ladite cavité consistant en deux parallélépipèdes rectangles à base carré adjacents.

Selon un ou plusieurs modes de réalisation, les hauteurs des parties supérieures des première et deuxième cheminées sont sensiblement égales. Ainsi, l'empilage des couches de paniers amovibles est facilité car un plus grand nombre d'orientations possibles des paniers amovibles est obtenu. Selon un ou plusieurs modes de réalisation, les hauteurs des parties supérieures des première et deuxième cheminées sont différentes. Ainsi, les paniers peuvent être préconfigurés pour contraindre leur empilage selon des orientations prédéfinies.

Selon un ou plusieurs modes de réalisation, au moins une de la pluralité de cheminées a une hauteur inférieure ou égale au double de la hauteur des parois latérales (e.g. la hauteur de la partie supérieure de ladite cheminée est sensiblement inférieure ou égale à la hauteur des parois latérales).

Selon un ou plusieurs modes de réalisation, au moins une de la pluralité de cheminées du panier amovible est perméable au gaz.

Selon un ou plusieurs modes de réalisation, les extrémités supérieures de la pluralité de cheminées sont adaptées pour être situées au-dessus de la couche de média filtrant. Ainsi, le liquide est guidé pour passer préférentiellement au travers du lit de filtration.

Selon un ou plusieurs modes de réalisation, au moins une des extrémités supérieures de la pluralité de cheminées du panier amovible comprend une grille, permettant de notamment limiter des projections de liquide non filtré dans les cheminées de passage de gaz des paniers.

Selon un ou plusieurs modes de réalisation, le fond et/ou les parois latérales comprennent une armature périphérique. Ainsi, l'intégrité structurelle du panier amovible est renforcée. Selon un ou plusieurs modes de réalisation, le fond et/ou les parois latérales comprennent un élément de séparation ajouré, tel qu'une grille métallique, par exemple du type Johnson connu de l'homme du métier, ou une plaque métallique percée d'orifices dont la taille des mailles de la grille ou des orifices est telle que celle-ci est strictement inférieure à la dimension moyenne des éléments constituants le média filtrant porté par le panier amovible.

Selon un ou plusieurs modes de réalisation, le panier amovible comprend en outre au moins un renfort adapté à rigidifier le panier amovible. Selon un ou plusieurs modes de réalisation, l'au moins un renfort constitue un point d'accroché du panier amovible pour la manutention du panier amovible. Selon un ou plusieurs modes de réalisation, l'au moins un renfort relie au moins un élément sélectionné parmi le fond, les parois et les cheminées du panier amovible à au moins un autre élément sélectionné parmi le fond, les parois et les cheminées du panier amovible. Ainsi, l'intégrité structurelle du panier amovible est renforcée et la manutention du panier amovible est facilitée.

Selon un ou plusieurs modes de réalisation, le panier amovible comprend au moins une couche de média filtrant.

Selon un ou plusieurs modes de réalisation, le panier amovible comprend une grille de protection perforée, optionnellement amovible, configurée pour être disposée au-dessus de la couche supérieure de média filtrant. Ainsi, le média filtrant reste agencé à l'intérieur du panier amovible et n'est pas expulsé lors des étapes de manutention et des étapes de fonctionnement du réacteur. La grille de protection autorise notamment un retrait des paniers amovibles remplis de média filtrant en les orientant avec un angle par rapport à l'horizontal afin de faciliter leur passage à travers un orifice de sortie pratiqué dans le réacteur (par exemple un trou d'homme), sans perte de média filtrant.

Selon un ou plusieurs modes de réalisation, le panier amovible comprend en outre un élément de connexion pour relier une paroi latérale du panier amovible à une paroi latérale d'un panier amovible adjacent. Ainsi, l'intégrité structurelle des couches de paniers amovibles est renforcée. Selon un ou plusieurs modes de réalisation, l'élément de connexion comprend une languette (e.g. une plaque) pour couvrir au moins en partie l'espace entre le panier amovible et le panier amovible adjacent. Selon un ou plusieurs modes de réalisation, l'élément de connexion est solidaire du panier amovible. Ainsi, le liquide est guidé pour passer préférentiellement au travers du lit de filtration et non pas entre deux paniers amovibles.

Selon un ou plusieurs modes de réalisation, le panier amovible est adapté à être posé sur des moyens de distribution d'un plateau perforé du réacteur, le panier amovible comprenant des moyens de support coopérant avec au moins un des moyens de distribution du plateau perforé. Ainsi, les opérations de montage et le démontage restent facilités étant donné que les paniers amovibles sont soutenus directement par le plateau perforé.

Selon un deuxième aspect, les objets précités, ainsi que d'autres avantages, sont obtenus par un panier amovible adapté à contenir et retenir au moins un média filtrant pour filtration et distribution d'une phase gazeuse et d'une phase liquide, et adapté à être disposé en amont d'un lit catalytique fixe d'un réacteur fonctionnant à co-courant descendant de gaz et de liquide, ledit panier amovible comprenant :
un fond sensiblement horizontal et une pluralité de parois latérales sensiblement verticales et/ou au moins une paroi latérale (sensiblement verticale) ellipsoïdale, le fond et/ou au moins une paroi latérale étant perméable au gaz et au liquide ; et
une pluralité de cheminées sensiblement verticales et ouvertes à leurs extrémités inférieures et supérieures, chaque cheminée comprenant une partie inférieure comprenant l'extrémité inférieure fixée sur le fond et s'étendant entre les parois latérales, et une première cheminée du panier amovible comprenant une partie supérieure s'étendant au-dessus des parois latérales, et
dans lequel
les parties inférieures et supérieures des cheminées sont de forme sensiblement tubulaires de sorte que la forme définie par la section transversale de la partie supérieure de la première cheminée peut être entourée par la forme définie par la section transversale de la partie inférieure d'une deuxième cheminée du panier amovible (tous les modes de réalisation selon le premier aspect sont applicables aux modes de réalisation selon deuxième aspect).

Selon un ou plusieurs modes de réalisation, une deuxième cheminée du panier amovible comprend une partie supérieure s'étendant au-dessus des parois latérales, et la forme définie par la section transversale de la partie inférieure de la première cheminée peut entourer la forme définie par la section transversale de la partie supérieure de la deuxième cheminée.

Selon un troisième aspect, les objets précités, ainsi que d'autres avantages, sont obtenus par un dispositif de filtration et de distribution d'une phase gazeuse et d'une phase liquide, apte à être disposé en amont d'un lit catalytique fixe d'un réacteur fonctionnant à co-courant descendant de gaz et de liquide, comprenant :
un plateau perforé s'étendant selon un plan horizontal sur lequel sont fixés des moyens de distribution, tels que des cheminées verticales optionnellement à section circulaire, sensiblement verticaux et ouverts à leurs extrémités supérieures et inférieures, lesdits moyens de distribution étant munis d'ouvertures sur au moins une fraction de leur hauteur ; et
une pluralité de paniers amovibles selon le premier aspect et/ou le deuxième aspect disposés sur les moyens de distribution.

Outre leur fonction de support pour les paniers amovibles, les moyens de distribution du plateau perforé peuvent assurer une fonction de guidage lors de l'installation desdits paniers amovibles.

Un autre avantage du dispositif de filtration et de distribution tient au fait que le chargement des paniers amovibles en média filtrant peut se faire à l'extérieur du réacteur, ce qui facilite et accélère grandement l'opération, cette dernière se limitant ensuite à la mise en place des paniers amovibles chargés au-dessus du plateau perforé. En outre, le réglage de la hauteur des particules de filtration dans chaque panier amovible peut se faire de manière très précise, panier par panier.

Selon un ou plusieurs modes de réalisation, les moyens de distribution comprennent un élément déflecteur permettant notamment de : supporter les paniers amovibles ; fermer l'extrémité supérieure des moyens de distribution ; empêcher l'introduction de la phase liquide par l'ouverture de l'extrémité supérieure des moyens de distribution, tout en laissant passer la phase gazeuse dans la zone latérale de la partie supérieure des moyens de distribution.

Selon un ou plusieurs modes de réalisation, le panier amovible est adapté à être posé sur les moyens de distribution d'un plateau perforé du réacteur, le panier amovible comprenant des moyens de support coopérant avec les moyens de distribution du plateau perforé. Selon un ou plusieurs modes de réalisation, les moyens de support comprennent le fond du panier amovible.

Selon un ou plusieurs modes de réalisation, les paniers amovibles sont agencés pour former une première couche de paniers amovibles sur les moyens de distribution. Selon un ou plusieurs modes de réalisation, les paniers amovibles sont agencés pour former au moins une couche de paniers amovibles supplémentaire sur la première couche de paniers amovibles.

Selon un ou plusieurs modes de réalisation, les paniers amovibles sont agencés de sorte qu'une cheminée du panier amovible est en alignement par rapport à un des moyens de distribution du plateau perforé, et l'élément déflecteur dudit moyen de distribution comprend des ouvertures autorisant le passage du gaz entre ladite cheminée du panier amovible et ledit moyen de distribution. Ainsi, l'accès du gaz au travers du dispositif de filtration et de distribution est facilité.

Selon un ou plusieurs modes de réalisation, les paniers amovibles sont agencés de sorte qu'une cheminée du panier amovible est décalée par rapport aux moyens de distribution. Ainsi, le mélange du gaz et du liquide dans l'espace de collecte entre le fond des paniers amovibles et le plateau perforé est facilité.

Selon un ou plusieurs modes de réalisation, les paniers amovibles d'une même couche sont disposés de façon parallèle les uns aux autres et décalée par rapport aux paniers amovibles d'une couche adjacente. Selon un ou plusieurs modes de réalisation, les paniers amovibles d'une même couche sont disposés de façon perpendiculaire aux paniers amovibles d'une couche adjacente. Ainsi, l'intégrité structurelle des couches successives de paniers amovibles est renforcée.

Selon un ou plusieurs modes de réalisation, la pluralité de paniers amovibles est agencée pour former une succession de couches de forme pyramidale. Ainsi, les paniers amovibles peuvent être agencés dans l'espace sous le fond supérieur du réacteur, optimisant ainsi l'espace disponible dans réacteur.

Selon un ou plusieurs modes de réalisation, les moyens de support comprennent au moins une des parois latérales du panier amovible coopérant avec les moyens de distribution.

Selon un ou plusieurs modes de réalisation, les moyens de support comprennent un tube fixé sur le fond du panier amovible dont le diamètre est sensiblement supérieur à celui des moyens de distribution, ledit tube étant fermé à une extrémité supérieure et ouvert à une extrémité inférieure de sorte que le tube soit apte à recevoir un moyen de distribution et ainsi reposer sur ce dernier.

Selon un ou plusieurs modes de réalisation, le tube comprend une ou plusieurs ouvertures dans une section attenante à son extrémité supérieure de manière à laisser diffuser la phase gazeuse à l'intérieur des moyens de distribution.

Selon un ou plusieurs modes de réalisation, le tube est perméable à la phase liquide et éventuellement capable de retenir la phase solide constitué par le média filtrant.

Selon un ou plusieurs modes de réalisation, le tube est poreux sur sa hauteur de manière à permettre également le passage dans les moyens de distribution de la phase liquide accumulée au niveau du média filtrant. Par exemple, les ouvertures sont réparties sur la hauteur du tube avec un pas régulier entre les ouvertures. Alternativement, le tube est réalisé à partir d'une grille perforée, par exemple du type Johnson.

Selon un ou plusieurs modes de réalisation, les moyens de support comprennent une pluralité de bras verticaux fixés sur le fond du panier amovible et équipés de moyens d'accrochage configurés pour coopérer avec les moyens de distribution.

Selon un ou plusieurs modes de réalisation, les paniers amovibles situés en périphérie dudit dispositif de filtration et de distribution ont au moins une paroi latérale présentant une courbure. Ce mode de réalisation permet notamment de réaliser un dispositif de filtration et de distribution qui peut épouser la courbure de la paroi du réacteur dans lequel il est installé de manière à couvrir de manière compacte la section du réacteur.

Selon un ou plusieurs modes de réalisation, deux paniers amovibles adjacents sont séparés par un espace libre ou jeu fonctionnel de manière à permettre leur mise en place et leur retrait panier par panier. Selon un ou plusieurs modes de réalisation, cet espace libre est de 1 à 20 mm, tel que de 1 à 10 mm.

Selon un quatrième aspect, les objets précités, ainsi que d'autres avantages, sont obtenus par un réacteur adapté à fonctionner à co-courant descendant de gaz et de liquide comprenant dans le sens de l'écoulement des fluides :
un lit catalytique fixe ; et
un dispositif de filtration et de distribution d'une phase gazeuse et d'une phase liquide selon le troisième aspect agencé en amont du lit catalytique.

Selon un ou plusieurs modes de réalisation, le dispositif de filtration et de distribution est agencé dans le réacteur de sorte qu'une zone sensiblement annulaire est laissée libre entre la paroi du réacteur et les parois des paniers amovibles périphériques attenantes à la paroi du réacteur. Selon un ou plusieurs modes de réalisation, la zone annulaire est de 2% à 50%, tel que de 5% à 20%, de la section du réacteur.

Selon un ou plusieurs modes de réalisation, la pluralité de paniers amovibles est agencée dans le réacteur de façon à remplir une zone de fond supérieur (i.e., dôme supérieur) du réacteur.

Selon un ou plusieurs modes de réalisation, le réacteur est un réacteur adapté à fonctionner en écoulement ruisselant à co-courant descendant de gaz et de liquide avec une vitesse liquide comprise entre 0,1 et 5 cm/s, par exemple comprise entre 0,1 et 1 cm/s (dans le cas des réacteurs d'hydrotraitement) ou comprise entre 1,1 et 5 cm/s (dans le cas des réacteurs d'hydrogénation sélective).

Selon un ou plusieurs modes de réalisation, pour des raisons de facilité de manutention, les paniers amovibles ont une dimension inférieure à celle d'un trou d'homme pratiqué dans le réacteur.

Selon un cinquième aspect, les objets précités, ainsi que d'autres avantages, sont obtenus par un procédé d'hydrotraitement et/ou d'hydrocraquage d'une charge hydrocarbonée contenant au moins une fraction d'hydrocarbures ayant une teneur en soufre d'au moins 0,5% en poids, et/ou une température initiale d'ébullition d'au moins 300°C, et/ou une température finale d'ébullition d'au moins 500°C, dans lequel on introduit la charge dans un réacteur selon le quatrième aspect. L'application principalement visée est le traitement catalytique de coupes pétrolières lourdes, même si les dispositifs de filtration et de distribution selon la présente description peuvent s'appliquer à tout traitement (e.g. hydrogénation) de coupes pétrolières chargées de particules colmatantes ou d'éléments précurseurs de la formation de coke, pouvant provoquer un colmatage du lit fixe.

Des modes de réalisation selon les aspects référencés ci-dessus ainsi que d'autres caractéristiques et avantages des dispositifs selon les aspects précités vont apparaître à la lecture de la description qui va suivre, donnée à titre uniquement illustratif et non limitatif, et en référence aux dessins suivants.

### Brève description des dessins

La figure 1 est une vue schématique de profil d'un panier amovible selon des modes de réalisation de la présente description.
La figure 2 est une vue schématique en coupe du panier amovible de la figure 1 sur lequel est disposé un média filtrant.
La figure 3 est une vue schématique de dessous du panier amovible des figures 1 et 2.
La figure 4 est une vue schématique de côté d'un panier amovible selon des modes de réalisation de la présente description.
La figure 5 est une vue schématique de dessous du panier amovible de la figure 4.
La figure 6 est une vue schématique de côté d'un panier amovible selon des modes de réalisation de la présente description.
La figure 7 est une vue schématique de dessous du panier amovible de la figure 6.
La figure 8 est une vue schématique de côté d'un panier amovible selon des modes de réalisation de la présente description.
La figure 9 est une vue schématique de côté d'un panier amovible selon des modes de réalisation de la présente description.
La figure 10 est une vue schématique de profil d'un panier amovible selon des modes de réalisation de la présente description.
La figure 11 est une vue schématique en coupe d'une partie de réacteur comprenant un dispositif de filtration et de distribution selon des modes de réalisation de la présente description.
La figure 12 est une vue schématique de côté de paniers amovibles selon des modes de réalisation de la présente description sur lesquels sont disposés des médias filtrant.
La figure 13 est une vue schématique de dessus de paniers amovibles selon des modes de réalisation de la présente description.

Généralement, les éléments semblables sont dénotés par des références identiques dans les figures.

### Description détaillée

La présente description concerne, selon le premier aspect et le deuxième aspect, un panier amovible adapté à contenir et retenir au moins un média filtrant pour filtration et pré-distribution d'une phase gazeuse et d'une phase liquide, et adapté à être disposé en amont d'un lit catalytique fixe d'un réacteur fonctionnant à co-courant descendant de gaz et de liquide.

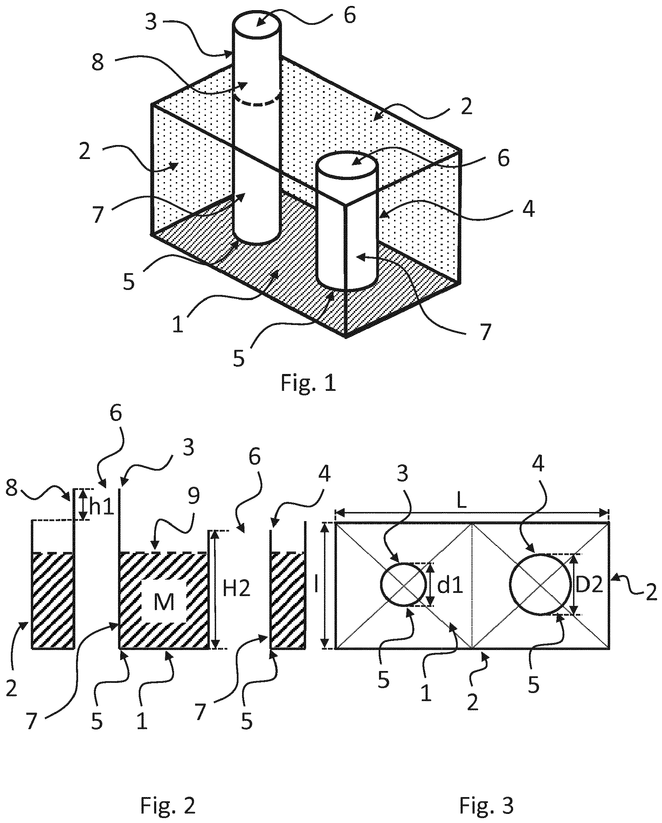

En référence aux figures 1, 2 et 3, le panier amovible est destiné à être rempli d'un média filtrant M et comprend un fond 1 sensiblement horizontal et une pluralité de parois latérales 2 sensiblement verticales et préférablement de même hauteur, les parois délimitant la section transversale du panier amovible (i.e., section horizontale ou perpendiculaire à la hauteur du panier). Dans cet exemple, le fond 1 est perméable au gaz et au liquide. En revanche, selon la configuration choisie, au moins un élément choisi parmi le fond et les parois latérales est perméable au gaz et au liquide. Dans cet exemple, le panier amovible comprend quatre parois latérales 2 pour former un parallélépipède rectangle. En revanche, selon la configuration choisie, le panier amovible peut comprendre un nombre différent de parois latérales pour former, par exemple, un prisme triangulaire, carré, hexagonal, etc. Le panier amovible peut également comprendre une paroi latérale 2 ellipsoïdale unique pour former une cavité cylindrique circulaire ou comprendre au moins une paroi latérale 2 courbée. Par exemple, les paniers amovibles destinés à être disposés le long de la paroi du réacteur peuvent comporter une courbure sur au moins une paroi latérale 2.

Le panier amovible comprend en outre des cheminées, telles qu'une première cheminée 3 et une deuxième cheminée 4, sensiblement verticales et ouvertes à leurs extrémités inférieures 5 et supérieures 6. Les première et deuxième cheminées 3 et 4 comprennent chacune une partie inférieure 7 comprenant l'extrémité inférieure 5 fixée sur le fond 1 et s'étendant entre les parois latérales 2. De plus, la première cheminée 3 comprend également une partie supérieure 8 s'étendant au-dessus des parois latérales 2.

Comme indiqué sur les figures 1, 2 et 3, la partie supérieure 8 de la première cheminée 3 peut être adaptée à être introduite dans une partie inférieure 7 d'une cheminée d'un autre panier amovible, c.-à-d. dans une partie inférieure 7 d'une deuxième cheminée 4 d'un panier amovible selon les premier et deuxième aspects, tel que par exemple sensiblement identique au panier amovible représenté sur les figures 1, 2 et 3. Ainsi, les paniers amovibles sont empilables de sorte que plusieurs couches de paniers amovibles peuvent être superposées en amont du lit catalytique du réacteur.

Selon un ou plusieurs modes de réalisation, les parties inférieures 7 et supérieures 8 de la première cheminée 3 ainsi que la partie inférieure 7 de la deuxième cheminée 4 sont de forme tubulaire de sorte que la forme de la section transversale de la partie supérieure 8 de la première cheminée 3 peut être entourée par la forme de la section transversale de la partie inférieure 7 de la deuxième cheminée 4. Par exemple, comme indiqué sur la figure 3, les parties inférieures 7 et supérieures 8 des cheminées 3 et 4 peuvent former des tubes à section circulaire de sorte que le diamètre D2 de la partie inférieure 7 de la deuxième cheminée 4 soit supérieur au diamètre d1 de la partie supérieure 8 de la première cheminée 3. Il est entendu que les cheminées du panier amovible peuvent être de toute forme dès lors que les parties supérieures 8 des cheminées du panier amovible sont adaptées à être introduites dans des parties inférieures 7 de cheminées d'un autre panier amovible selon les premier et deuxième aspects.

Comme indiqué sur la figure 2, la hauteur h1 de la partie supérieure 8 de la première cheminée 3 est plus petite ou égale à la hauteur H2 de la partie inférieure 7 de la deuxième cheminée 4. Ainsi, le fond 1 du panier amovible peut être supporté par les parois latérales 2 d'un autre panier amovible. De plus, si le lit de filtration venait à se boucher, les liquides pourraient s'écouler préférablement avec le gaz dans les cheminées du panier amovible.

Comme indiqué sur la figure 2, les extrémités supérieures 6 des première et deuxième cheminées 3 et 4 sont adaptées pour être situées au-dessus de la couche de média filtrant M de sorte que le liquide passe préférentiellement au travers du lit de filtration.

Dans l'exemple indiqué sur la figure 3, deux premières parois latérales 2 opposées sont de largeur L sensiblement égale au double de la largeur l des deux autres parois latérales 2. Ainsi, les parois latérales forment une cavité consistant en deux parallélépipèdes rectangles à base carré adjacents. Dans cet exemple, chacune des première et deuxième cheminées 3 et 4 est disposée au centre d'un desdits parallélépipèdes rectangles à base carré. Par exemple, les cheminées 3 et 4 sont disposées à une distance sensiblement égale à L/4 de trois des parois latérales 2 et à une distance sensiblement égale à 3L/4 de la quatrième paroi latérale 2. Ainsi, les paniers amovibles d'une même couche de paniers amovibles peuvent être disposés selon une configuration perpendiculaire à celle des paniers amovibles d'une couche adjacente. Il est entendu que d'autres configurations structurelles sont possibles de sorte que des paniers amovibles soient empilables de façon perpendiculaire à d'autres paniers amovibles.

Selon un ou plusieurs modes de réalisation, la face supérieure du panier amovible est au moins en partie, et de préférence en totalité, ouverte pour permettre un chargement et un déchargement aisés du média filtrant M, ces opérations pouvant être effectuées lorsque le réacteur est à l'arrêt et généralement à l'extérieur de celui-ci. En outre, le panier amovible peut comprendre une grille de protection perforée 9 (figure 2), optionnellement amovible, disposée au-dessus de la couche supérieure de média filtrant M pour encapsuler le média filtrant M à l'intérieur du panier amovible.

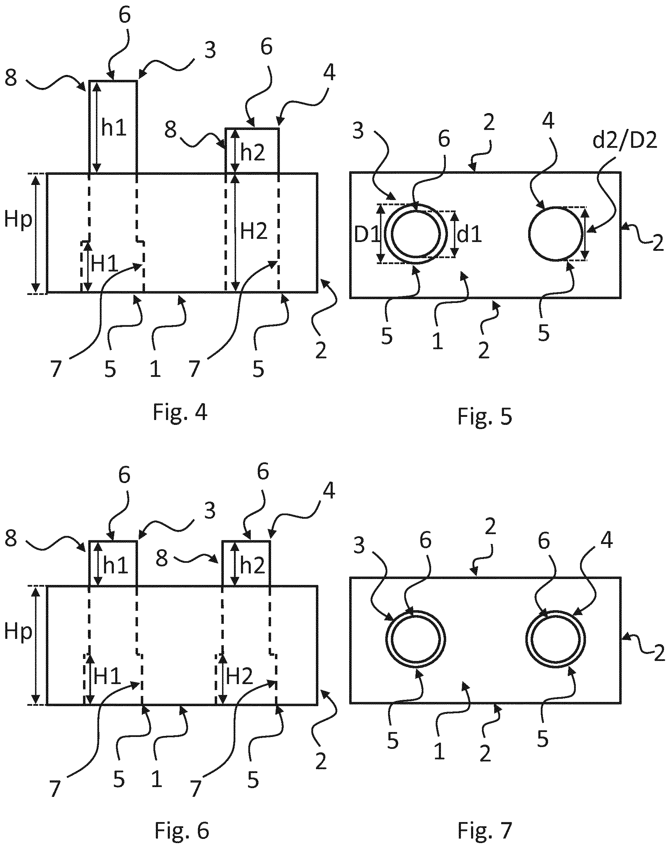

En référence aux figures 4 et 5, la deuxième cheminée 4 du panier amovible peut comprendre une partie supérieure 8 s'étendant au-dessus des parois latérales 2 de sorte que la partie supérieure 8 de la deuxième cheminée 4 soit également adaptée à être introduite dans une partie inférieure 7 d'une cheminée d'un autre panier amovible, c.-à-d. dans une partie inférieure 7 d'une première cheminée 3 d'un panier amovible selon les premier et deuxième aspects, tel que par exemple sensiblement identique au panier amovible représenté sur les figures 4 et 5.

Selon un ou plusieurs modes de réalisation, la forme définie par la section transversale de la partie inférieure 7 de la première cheminée 3 est adaptée à entourer la forme définie par la section transversale de la partie supérieure 8 de la deuxième cheminée 4. Les deux cheminées 3 et 4 du panier amovible s'étendant toutes deux au-dessus des parois latérales 2, le guidage pour la superposition des paniers est amélioré. Par exemple, comme indiqué sur la figure 5, les parties inférieures 7 et supérieures 8 des cheminées 3 et 4 peuvent former des tubes à section circulaire de sorte que le diamètre D1 de la partie inférieure 7 de la première cheminée 3 soit supérieur au diamètre d2 de la partie supérieure 8 de la deuxième cheminée 4. Dans cet exemple, le diamètre d2 de la partie supérieure 8 et le diamètre D2 de la partie inférieure de la deuxième cheminée 4 sont sensiblement égaux. Par contre, d2 et D2 peuvent être différents dès lors que D2>d1 et D1>d2.

Comme indiqué sur la figure 4, la hauteur h2 de la partie supérieure 8 de la deuxième cheminée 4 est plus petite ou égale à la hauteur H1 de la partie inférieure 7 de la première cheminée 3.

En référence aux figures 6 et 7, les hauteurs des parties supérieures 8 des première et deuxième cheminées 3 et 4 peuvent être sensiblement égales. Ainsi, un plus grand choix d'orientation des paniers empilables est obtenu. Il est entendu que lesdites hauteurs des parties supérieures 8 des première et deuxième cheminées 3 et 4 peuvent être différentes de sorte que l'empilage des paniers amovible soit pré-orienté. Dans cet exemple, les diamètres d1 et d2 des parties supérieures 8 des première et deuxième cheminées 3 et 4 sont sensiblement égaux ; les diamètres D1 et D2 des parties inférieures 7 des première et deuxième cheminées 3 et 4 sont sensiblement égaux. Il est entendu que d'autres configurations sont possible dès lors que D2>d1 et D1>d2.

Selon un ou plusieurs modes de réalisation, en référence aux figures 4 et 6, lorsque la hauteur H1 de la partie inférieure 7 de la première cheminée 3 et/ou la hauteur H2 de la partie inférieure 7 de la deuxième cheminée 4 sont inférieures à la hauteur Hp des parois latérales 2, la cheminée correspondante peut comprendre en outre une partie intermédiaire s'étendant au-dessus de la partie inférieure 7, par exemple s'étendant de la partie inférieure 7 à la partie supérieure 8 de ladite cheminée.

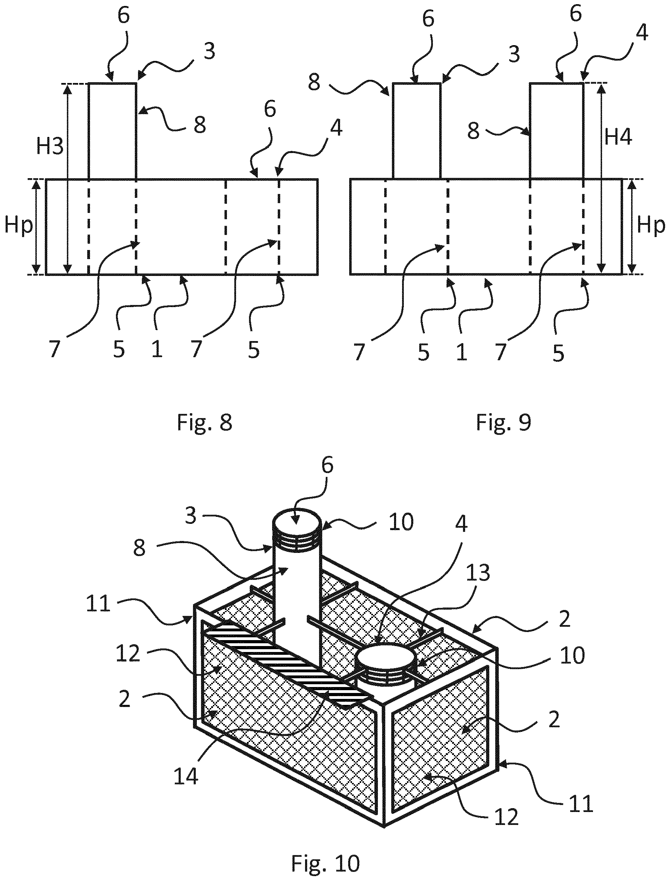

En référence à la figure 8, au moins une des première et deuxième cheminées 3 et 4 peut avoir une hauteur (H3 et/ou H4) sensiblement égale au double de la hauteur Hp des parois latérales 2. En référence à la figure 9, les hauteurs H3 et H4 sont sensiblement égales au double de la hauteur Hp des parois latérales 2. En d'autres termes, dans l'exemple de la figure 9, les hauteurs h1, h2, H1 et H2 sont sensiblement égales.

En référence à la figure 10, au moins une des extrémités supérieures 6 des première et deuxième cheminées 3 et 4 peut comprendre une grille 10, permettant notamment d'éviter d'éventuelles projections de liquide non filtré de passer directement par la première cheminée 3 et/ou la deuxième cheminée 4. De plus, le fond 1 et/ou les parois latérales 2 peuvent comprendre une armature périphérique 11, permettant notamment de renforcer l'intégrité du panier amovible, et/ou un élément de séparation ajouré 12, tel qu'une grille ou plaque métallique perméable au gaz et/ou au liquide. De plus, au moins une de la pluralité de cheminées 3 et 4 du panier amovible peut également est ajourée de sorte à être perméable au gaz.

Comme indiqué sur la figure 10, le panier amovible peut comprendre en outre des renforts 13 adaptés à rigidifier le panier amovible, les renforts 13 pouvant servir notamment comme points d'accroché du panier amovible lors de la manutention. Dans cet exemple, les renforts 13 sont reliés aux cheminées 3 et 4 et aux parois latérales 2. Il est entendu que les renforts 13 peuvent également relier des parois latérales 2 entre elles et/ou le fond 1 à au moins un élément sélectionné parmi les cheminées 3 et 4 et les parois latérales 2.

En outre, le panier amovible peut comprendre un élément de connexion 14, tel qu'une languette (e.g. plaque), pour relier une paroi latérale 2 du panier amovible à une paroi latérale d'un panier amovible adjacent et optionnellement couvrir l'espace entre le panier amovible et le panier amovible adjacent. Selon un ou plusieurs modes de réalisation, l'élément de connexion 14 peut être solidaire du panier amovible. Ainsi, l'intégrité structurelle des couches de paniers amovibles est renforcée et le liquide passe préférentiellement au travers du lit de filtration. Selon un ou plusieurs modes de réalisation, l'ensemble des paniers amovibles s'ajuste de manière à couvrir toute la section transversale du réacteur en laissant seulement un espace annulaire libre dans le réacteur ainsi qu'un espace libre ou jeu fonctionnel entre les parois latérales des paniers amovibles adjacents de manière à permettre leur mouvement d'introduction ou de retrait individuellement ainsi que le positionnement des éléments de connexion 14.

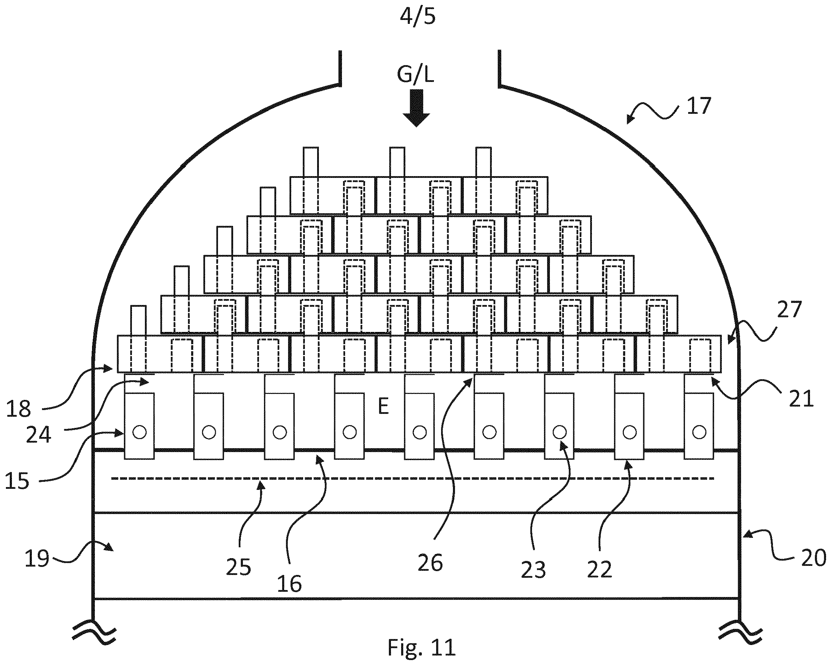

En référence à la figure 11, le panier amovible peut être adapté à être disposé sur des moyens de distribution 15 d'un plateau perforé 16 du réacteur 17, le panier amovible comprenant des moyens de support 18 coopérant avec les moyens de distribution 15 du plateau perforé 16. Ainsi, les opérations de montage et le démontage restent facilités étant donné que les paniers amovibles sont soutenus directement par les moyens de distribution 15.

La présente description concerne également, selon le troisième aspect, un dispositif de filtration et de distribution d'une phase gazeuse et d'une phase liquide destiné à l'alimentation d'un réacteur catalytique fonctionnant sur une charge gaz et liquide, préférablement dans un régime d'écoulement appelé régime ruisselant, c'est à dire avec une vitesse superficielle liquide comprise entre 0,1 cm/s et 5 cm/s.

Comme indiqué sur la figure 11, le dispositif de filtration et de distribution de phases liquide et gazeuse peut être disposé en amont d'un lit catalytique fixe 19 d'un réacteur 17 fonctionnant à co-courant descendant de gaz et de liquide. Dans cet exemple, l'enceinte (enveloppe) du réacteur 17 est délimitée par une paroi 20 généralement de section circulaire. Le dispositif de filtration et de distribution comprend un plateau perforé 16 (aussi appelé plateau distributeur, plateau plein ou plaque pleine) dont la fonction est de transformer le jet diphasique entrant dans le réacteur 17 en un mélange gaz/liquide uniformément distribué sur la surface du lit catalytique fixe 19 placé en aval dudit plateau perforé 16 et qui intègre optionnellement une fonction de filtration par la mise en place d'une ou plusieurs couches de filtration.

En référence à la figure 11, le dispositif de filtration et de distribution comprend le plateau perforé 16 sur lequel sont fixés des moyens de distribution 15, tels que des cheminées verticales, traversant le plateau perforé 16. Par exemple, les moyens de distribution 15 peuvent être fermés à leurs extrémités supérieures 21 et ouverts à leurs extrémités inférieures 22 et optionnellement perforés d'orifices latéraux 23 répartis sur la hauteur des moyens de distribution 15. Il est à noter que les orifices latéraux 23 pratiqués dans les moyens de distribution 15 peuvent être sous la forme de fentes. Chaque moyen de distribution 15 comprend en outre une ouverture latérale 24 située sous l'extrémité supérieure fermée 21 pour permettre l'introduction de la phase gazeuse.

Selon un ou plusieurs modes de réalisation, le plateau perforé 16 comprend une section qui correspond à celle de l'enceinte du réacteur 17. Par exemple, si le réacteur 17 est de section circulaire, la dimension de la section du plateau perforé 16 correspond à celle du diamètre interne du réacteur 17.

Comme indiqué sur la figure 11, l'extrémité inférieure 22 des moyens de distribution 15 débouche au niveau ou en-dessous du plateau perforé 16 et au-dessus du lit catalytique fixe 19. Selon un ou plusieurs modes de réalisation, le réacteur comprend en outre un élément dispersif 25 (e.g. grille métallique) agencé en dessous du plateau perforé 16 dont la fonction est de briser et disperser le jet de mélange gaz/liquide qui est expulsé de l'extrémité inférieure 22 des moyens de distribution 15. On notera que l'extrémité supérieure 21 ouverte des moyens de distribution 15 est coiffée d'un élément déflecteur 26, tel qu'une plaque, qui empêche l'introduction de la phase liquide par l'ouverture latérale 24 adjacente à l'extrémité supérieure 21 mais laisse passer la phase gazeuse dans la zone latérale de la partie supérieure.

Comme indiqué sur la figure 11, le dispositif de filtration et de distribution intègre en outre une fonction de filtration apportée par une pluralité de paniers amovibles selon le premier aspect et/ou le deuxième aspect agencés au-dessus du plateau perforé 16 et qui sont supportés par ce dernier. Dans cet exemple, les paniers amovibles sont empilés en plusieurs couches dans un même plan (les plus grandes arêtes de tous les paniers sont parallèles entre elles). Le panier amovible comprend en outre des moyens de support 18 coopérant avec les moyens de distribution 15 du plateau perforé 16. Dans l'exemple de la figure 11, les moyens de support 18 correspondent au fond 1 du panier amovible dont les dimensions principales (e.g. longueur et largeur ; diamètre) sont sensiblement supérieures à celles des moyens de distribution 15. Outre leur fonction de support pour les paniers amovibles, les moyens de distribution 15 du plateau perforé 16 peuvent assurer une fonction de guidage lors de l'installation desdits paniers amovibles dans le réacteur 17.

Selon un ou plusieurs modes de réalisation, lorsque le panier amovible est disposé de sorte qu'une de ses cheminées soit alignée avec un moyen de distribution 15 du plateau perforé 16, l'élément déflecteur 26 dudit moyen de distribution 15 comprend des ouvertures autorisant le passage du fluide gazeux entre la cheminée du panier amovible et le moyen de distribution 15. Selon un ou plusieurs modes de réalisation, le fond 1 du panier amovible et/ou l'élément déflecteur 26 comportent respectivement des éléments de positionnement complémentaires (du type male/femelle) aptes à s'engager l'un avec l'autre assurant ainsi le maintien en place du panier amovible par rapport au plateau perforé 16.

Selon un ou plusieurs modes de réalisation, les paniers amovibles sont agencés de sorte qu'une cheminée du panier amovible est en décalé par rapport au moyen de distribution 15. Ainsi, le mélange du gaz et du liquide dans l'espace de collecte E entre le fond des paniers amovibles et le plateau perforé 16 est facilité.

Avantageusement, l'utilisation d'éléments de fixation tels que des vis pour fixer les paniers amovibles n'est pas nécessaire, les paniers amovibles pouvant être positionnés côte à côte, par rangées, de sorte que les moyens de support 18 coopèrent avec les moyens de distribution 15. On notera que les moyens de support 18 peuvent correspondre à d'autres éléments du panier amovible. Par exemple, selon un ou plusieurs modes de réalisation, les moyens de support 18 comprennent au moins une des première et deuxième cheminées 3 et 4 du panier amovible coopérant avec les moyens de distribution 15 de sorte que les moyens de distribution 15 peuvent être insérés dans les parties inférieures 7 des cheminées des paniers amovibles. Selon un ou plusieurs modes de réalisation, un débord s'étendant vers l'intérieur peut être pourvu dans les parties inférieures 7 des cheminées 3 et 4 du panier amovible, le débord étant adapté pour reposer sur les moyens de distribution 15. Selon un ou plusieurs modes de réalisation, les moyens de distribution 15 peuvent être dépourvus des éléments déflecteurs 26 pour permettre un meilleur passage du gaz.

Selon un ou plusieurs modes de réalisation, les moyens de support 18 peuvent être définis comme indiqué dans le document FR 3 043 339. Selon un ou plusieurs modes de réalisation, les moyens de support 18 comprennent au moins une des parois latérales 2 du panier amovible coopérant avec les moyens de distribution 15. Selon un ou plusieurs modes de réalisation, les moyens de support 18 peuvent se présenter sous la forme d'un tube (non représenté) fixé sur le fond 1 du panier amovible et dont le diamètre est sensiblement supérieur à celui des moyens de distribution 15. Le tube est fermé à son extrémité supérieure par une plaque et ouvert à son extrémité inférieure de sorte que le tube soit apte à recevoir un moyen de distribution 15 du plateau perforé 16. Une fois le panier amovible mis en place, celui-ci repose sur le moyen de distribution 15 par l'intermédiaire de la plaque du tube fixé sur le fond 1 du panier amovible. On notera par ailleurs que la section qui est attenante à l'extrémité supérieure dudit tube peut comprendre des ouvertures qui sont en communication avec l'ouverture latérale 24 du moyen de distribution 15 sur lequel il est monté de manière à autoriser le passage du flux gazeux dans le tube puis dans le moyen de distribution 15 du plateau perforé 16. Selon un ou plusieurs modes de réalisation, lorsque les moyens de distribution 15 sont munis d'orifices répartis sur leur hauteur, les tubes sont également poreux sur au moins la moitié inférieure de leur hauteur, par exemple sur toute leur hauteur, pour autoriser le passage de la phase liquide épurée depuis les paniers amovibles dans les moyens de distribution 15. Selon un ou plusieurs modes de réalisation, les moyens de support 18 se présentent sous la forme de bras verticaux (non représentés) fixés au fond 1 du panier amovible et lesdits bras sont équipés de moyens d'accrochage configurés pour coopérer avec les moyens de distribution 15, par exemple au niveau de l'ouverture latérale 24 des moyens de distribution 15 ou sur un niveau quelconque des moyens de distribution.

Comme indiqué sur la figure 11, les moyens de support 18 des paniers amovibles et les moyens de distribution 15 du plateau perforé 16 peuvent être agencés de manière à créer l'espace de collecte E de la phase liquide (appelé aussi zone de mélange du liquide E) entre le fond 1 des paniers amovibles et le plateau perforé 16.

Selon un ou plusieurs modes de réalisation, comme indiqué sur la figure 11, les paniers amovibles sont agencés pour former au moins une couche de paniers amovibles sur les moyens de distribution 15.

Selon un ou plusieurs modes de réalisation, comme indiqué sur la figure 11, la section développée par l'ensemble des paniers amovibles du dispositif de filtration et de distribution n'occupe pas la totalité de la section du réacteur 17. Il peut exister en effet un espace annulaire 27 entre la zone de filtration des paniers amovibles dits de "périphérie" et la paroi 20 du réacteur. Cet espace annulaire 27 permet le passage du liquide dans la zone de collecte E même dans la situation où le média filtrant M est colmaté par les différentes impuretés récupérées au cours du temps.

Dans le cas où la fonction de filtration n'est plus assurée par les paniers amovibles, le plateau perforé 16 peut continuer néanmoins de fonctionner via les orifices latéraux 23 des moyens de distribution 15 qui sont situés dans la zone de mélange du liquide E. La largeur de cet espace annulaire est établie pour que le bilan pression soit respecté même dans le cas où le plateau est totalement colmaté. Selon un ou plusieurs modes de réalisation, la zone annulaire 27 correspond à de 2% à 50%, par exemple de 5% à 20%, de la section transversale du réacteur.

Lorsque le dispositif de filtration et de distribution est mis en oeuvre dans le réacteur 17, les paniers amovibles peuvent être remplis d'une ou plusieurs couches de média filtrant M, le média filtrant M pouvant être inerte ou actif. Par exemple, la couche de média filtrant M peut comporter des éléments de filtration dits de protection, sur une hauteur qui est généralement comprise entre 100 mm et 1500 mm, de préférence entre 150 mm et 500 mm, tel que 300 mm.

Les éléments de filtration constituant ladite couche peuvent être :
des adjuvants de filtration ;
des particules de matériau de garde ou toutes autres particules servant généralement d'éléments de protection, par exemple commercialisées par la société Axens ;
un support de catalyseur ou un catalyseur (frais ou usé ou régénéré).

Ces éléments de filtration sont de préférence des catalyseurs granulaires, des billes ou des extrudés ayant un diamètre de particules compris entre 0,5 et 5 mm, de préférence entre 1 et 3 mm. Ces catalyseurs sont de préférence composés d'une phase active contenant des métaux de transition sur un support contenant de l'alumine. Il est entendu que les éléments de filtration peuvent comprendre tout matériau susceptible de retenir les particules colmatantes contenues dans la charge, comme par exemple un matériau réticulé en céramique ou métallique, par exemple commercialisé par les sociétés Unicat ou Crystaphase. Ces matériaux réticulés peuvent se présenter sous forme de galettes de section circulaire de 3 à 5 cm de diamètre et de hauteur comprise entre 1 à 3 cm. Il est à noter que les éléments de filtration peuvent prendre différentes formes comme par exemple des billes, des cylindres multilobés, des cylindres simples, de tube creux ou encore en forme de roue de charrette ; cette liste n'étant pas exhaustive.

Dans la plupart des cas, une seule couche de média filtrant par panier amovible est suffisante, telle qu'une couche d'épaisseur comprise entre 100 mm et 1500 mm, de préférence entre 150 mm et 500 mm, tel que 300 mm. Néanmoins, on peut utiliser plusieurs couches de média filtrant par panier amovible et avec préférablement la taille des éléments de filtration d'une couche donnée qui est inférieure à celle des éléments de filtration constituant la couche immédiatement supérieure.

Selon un ou plusieurs modes de réalisation, la couche en contact avec le fond 1 du panier peut être exceptionnellement plus poreuse qu'une couche de média filtrant disposée au-dessus de celle-ci, par exemple dans le cas d'utilisation d'un catalyseur très fin pour éviter de boucher le fond 1 du panier amovible ou d'avoir un fond 1 de panier amovible troué trop fin. Selon un ou plusieurs modes de réalisation, le diamètre de la couche en contact avec le fond est 2 à 10 fois, par exemple 4 fois, supérieur au diamètre de la couche supérieure, afin d'éviter notamment le mélange et la ségrégation des particules.

Le fonctionnement du dispositif de filtration et de distribution installé dans un réacteur 17 à écoulement co-courant descendant d'une phase gazeuse et d'une phase liquide est décrit ci-dessous en référence à la figure 11. En général, le dispositif de filtration et de distribution selon le troisième aspect est positionné en amont du lit catalytique 19 (dans le sens de l'écoulement des fluides). Lorsque la charge biphasique gaz/liquide est introduite de manière étagée sur différents lits catalytiques échelonnés le long du réacteur 17, il est possible de positionner un dispositif de filtration et de distribution en amont de chacun des lits catalytiques. Le mélange gaz/liquide est envoyé en tête du dispositif de filtration et de distribution comme indiqué par la flèche G/L. La fraction gazeuse du mélange qui pénètre dans les moyens de distribution 15 par les ouvertures latérales 24 après passage à travers les cheminées 3 et 4 des paniers amovibles (et optionnellement à travers des ouvertures supérieures du tube lorsque le moyen de support 18 se présente sous la forme d'un tube), est dirigée ensuite sous le plateau perforé 16.

Quant à la fraction liquide qui est empêchée de passer dans la partie supérieure des moyens de distribution 15 par les éléments déflecteurs 26 (voir figure 11), elle est collectée dans les paniers amovibles et percole à travers la ou les couches de média filtrant M contenues dans les paniers amovibles. La mise en contact de la phase liquide avec le média filtrant M permet de retenir les particules responsables de l'encrassement du lit catalytique de manière à fournir un liquide dit "épuré" qui diffuse à travers les orifices du fond 1 des paniers amovibles. Le liquide épuré est ainsi collecté dans l'espace de collecte E. Le liquide épuré accumulé dans l'espace de collecte E diffuse alors dans les moyens de distribution 15 par les ouvertures 23 débouchant dans cet espace et est mélangé avec la phase gazeuse qui circule dans les moyens de distribution 15. Le mélange gaz/liquide épuré est évacué des moyens de distribution 15 par les extrémités inférieures 22 ouvertes sous le plateau perforé 16. Le jet de mélange gaz/liquide est ensuite dispersé lorsque qu'il rencontre le ou les éléments dispersifs 25 disposés entre le lit catalytique 19 et le plateau perforé 16.

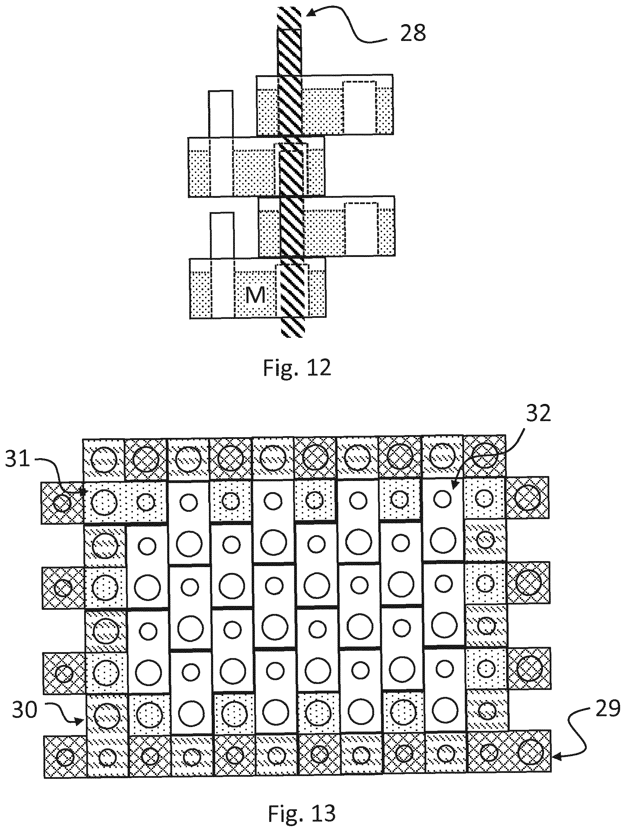

Comme indiqué sur la figure 12, les paniers amovibles peuvent être empilés de façon à être parallèles mais décalés d'une couche à l'autre. Ainsi, l'intégrité structurelle des couches de paniers amovibles est renforcée. De plus, de par l'agencement de paniers amovibles de sorte que les cheminées de chaque couche de paniers amovibles soient alignées avec des cheminées d'une couche de paniers amovibles adjacente, la figure 12 permet également de montrer la formation d'un cheminement de gaz 28 préférentiel au travers des couches de paniers amovibles. Ainsi, la distribution de gaz dans la partie centrale du réacteur 17 est favorisée, améliorant l'homogénéité de l'écoulement des phases au sein du lit catalytique. De plus, si le lit de filtration venait à se boucher, les liquides pourraient remonter le long des parois et des cheminées puis s'écouler avec le gaz dans les cheminées du panier amovible, préservant un équilibre de la distribution des fluides sous le plateau perforé 16. On notera que la formation d'un cheminement de gaz 28 préférentiel peut être obtenu dès lors que la partie supérieure 8 de la première cheminée 3 est adaptée à être introduite dans une partie inférieure 7 d'une cheminée d'un autre panier amovible.

Comme indiqué sur la figure 13, les paniers amovibles d'une même couche peuvent également être disposés selon une configuration perpendiculaire à celle des paniers amovibles d'une couche adjacente, permettant notamment de renforcer l'intégrité structurelle des couches de paniers amovibles. De plus, une telle configuration permet un agencement pyramidal des couches de paniers amovibles comme démontré dans l'exemple de la figure 13, dans lequel :
une première couche 29 comprend 44 paniers amovibles,
une deuxième couche 30 comprend 35 paniers amovibles disposés de façon perpendiculaire aux paniers amovibles de la première couche 29,
une troisième couche 31 comprend 27 paniers amovibles disposés de façon perpendiculaire aux paniers amovibles de la deuxième couche 30, et
une quatrième couche 32 comprend 20 paniers amovibles disposés de façon perpendiculaire aux paniers amovibles de la troisième couche 31.

Ainsi, un gain de place est obtenu car un tel agencement pyramidal permet de disposer les paniers amovibles dans l'espace sous le fond supérieur du réacteur 17, comme schématisé sur la figure 11.

La présente description concerne également, selon le quatrième aspect, un réacteur 17 adapté à fonctionner à co-courant descendant de gaz et de liquide comprenant dans le sens de l'écoulement des fluides : un lit catalytique fixe ; et un dispositif de filtration et de distribution d'une phase gazeuse et d'une phase liquide selon le troisième aspect agencé en amont du lit catalytique.

Selon un ou plusieurs modes de réalisation, le réacteur 17 peut être de type elliptique ou hémisphérique. Dans l'exemple de la figure 11, le fond supérieur du réacteur 17 comporte une tubulure d'entrée de diamètre prédéfini, permettant l'entrée des fluides gazeux et liquides, et est généralement équipé d'un brise jet (« feed diffuser » selon la terminologie anglo-saxonne) non représenté. La tubulure d'entrée peut éventuellement être montée sur un trou d'homme, non représenté, de manière à faciliter l'accès du personnel et des paniers amovibles. Le fond inférieur, non représenté, du réacteur 17 comporte une tubulure de sortie, non représentée, de diamètre prédéfini, permettant la sortie des fluides, et est généralement équipé d'un collecteur de sortie (« outlet collector » selon la terminologie anglo-saxonne) non représenté. L'enveloppe du réacteur 17 est équipée d'internes et notamment du dispositif de filtration et de distribution. Le lit catalytique 19 du réacteur 17 se situe en dessous de l'élément dispersif 25.

Selon le cinquième aspect, le panier amovible, le dispositif de filtration et de distribution et le réacteur 17 selon la présente description peuvent s'appliquer notamment aux procédés d'hydrotraitement et/ou d'hydrocraquage d'une charge hydrocarbonée contenant au moins une fraction d'hydrocarbures ayant une teneur en soufre d'au moins 0,5% en poids par rapport au poids total de la charge hydrocarbonée, et/ou une température initiale d'ébullition d'au moins 300°C et/ou une température finale d'ébullition d'au moins 500°C. Selon un ou plusieurs modes de réalisation, la charge hydrocarbonée comprend au moins une des caractéristiques suivantes : au moins 1 % en poids, tel qu'entre 1 et 2 % ou entre 2 et 4% en poids de soufre par rapport au poids total de la charge hydrocarbonée, une température initiale d'ébullition d'au moins 350°C et une température finale d'ébullition d'au moins 520°C, tel que d'au moins 540°C. Selon un ou plusieurs modes de réalisation, les charges hydrocarbonées susceptibles d'être traitées au moyen du plateau perforé 16 peuvent être notamment définies comme celles dont le point d'ébullition est supérieur à 350°C, notamment de type distillat sous vide, résidu ou apparenté : gazole sous vide, résidus atmosphériques, résidus sous vides, huiles désasphaltées, ou encore résidus ou distillats sous vide issus des procédés de conversion tels que par exemple le coking, les hydrotraitements ou l'hydrocraquage en lit fixe, en lit bouillonnant ou en lit mobile. Tous ces types de résidus ou distillats sous vide peuvent être pris seuls ou en mélange. Ces charges lourdes peuvent être utilisées telles quelles ou diluées par une fraction hydrocarbonée ou un mélange de fractions hydrocarbonées. Les charges lourdes concernées par la présente description peuvent aussi comprendre des coupes issues du procédé de liquéfaction du charbon, des extraits aromatiques, ou toutes autres coupes hydrocarbonées.

Selon un ou plusieurs modes de réalisation, le procédé d'hydrotraitement et/ou le procédé d'hydrocraquage sont mis en oeuvre à une température comprise entre 300°C et 500°C, tel qu'entre 350°C et 430°C, et sous une pression absolue comprise entre 5 MPa et 35 MPa, tel qu'entre 11 MPa et 26 MPa. Selon un ou plusieurs modes de réalisation, la vitesse spatiale de la charge hydrocarbonée définie comme étant le débit volumétrique de la charge hydrocarbonée divisé par le volume total du catalyseur, est comprise dans une gamme allant de 0,1 h⁻¹ à 5 h⁻¹, tel qu'entre 0,1 et 2 h⁻¹. Selon un ou plusieurs modes de réalisation, une quantité d'hydrogène mélangée à la charge hydrocarbonée est comprise entre 100 et 5000 normaux mètres cube (Nm³) par mètre cube (m³) de charge hydrocarbonée, tel qu'entre 200 et 2000 Nm³/m³.

### Exemples

Des exemples illustratifs de dimensionnement d'un panier amovible et d'un dispositif de filtration et de distribution selon la présente description sont décrits ci-dessous.

Les dimensions des paniers amovibles sont :
L :300 mm ;
l : 150 mm ;
Hp : 100 mm.

Le fond 1 rectangulaire de chaque panier amovible est muni de deux orifices surmontés de cheminées en forme de tubes circulaires ouverts à leurs extrémités inférieures et supérieures. Les dimensions des cheminées du panier amovible sont :
H3 : 180 mm ; Hp+h1
H4 : 120 mm ; Hp+h2
h1 : 80 mm ;
H1 : 100 mm ;
h2 : 20 mm ;
H2 : 100 mm ;
d1 : 50 mm ;
D1 : 60 mm ;
d2 : 50 mm ;
D2 : 60 mm.

Les paniers amovibles peuvent ainsi contenir un média filtrant M, composé par exemple d'une ou deux couches différentes, dont l'épaisseur totale est de 80 mm mesurée depuis le fond du panier amovible.

Les caractéristiques du plateau perforé 16 qui supporte 680 cheminées verticales sont les suivantes :
diamètre du plateau perforé 16 : 5,5 m.

Les dimensions des cheminées verticales du plateau perforé 16 sont :
hauteur des cheminées du plateau perforé 16 : 440 mm à partir du plateau perforé ;
diamètre externe des cheminées du plateau perforé 16 : 50 mm ;
pas entre les cheminées du plateau perforé 16 : 150 mm.

Les cheminées du plateau perforé 16 comportent deux rangées d'orifices pour l'admission du liquide :
rangée 1 d'orifices: hauteur par rapport au plateau perforé 16 de 40 mm, 3 trous de 5 mm ;
rangée 2 d'orifices: hauteur par rapport au plateau perforé 16 de 130 mm, 3 trous de 5 mm ;
ouverture pour le passage du gaz en tête de cheminée pour l'admission du gaz : 50 mm

Le dispositif comprend en outre 65 paniers amovibles de section rectangulaire pouvant être disposés sur les cheminées du plateau perforé 16. Dans ces exemples, les paniers amovibles sont supportés via leur fond 1 qui reposent sur les cheminées du plateau perforé 16.

Dans ces exemples, les paniers amovibles sont des parallélépipèdes rectangles et les cheminées 3 et 4 sont des tubes à section transversale circulaire. Il est entendu que les paniers amovibles et les cheminées 3 et 4 peuvent avoir d'autres formes, tels que des paniers à section triangulaire, carrée, hexagonale ou circulaires, et/ou des tubes à section elliptique ou polygonale (e.g. à section triangulaire, rectangulaire, etc.), respectivement.

## Revendications

1. Panier amovible adapté à contenir et retenir au moins un média filtrant (M) pour filtration et distribution d'une phase gazeuse et d'une phase liquide, et pouvant être adapté à être disposé en amont d'un lit catalytique fixe (19) d'un réacteur (17) fonctionnant à co-courant descendant de gaz et de liquide, ledit panier amovible comprenant :
un fond (1) sensiblement horizontal et une pluralité de parois latérales (2) sensiblement verticales et/ou au moins une paroi latérale (2) ellipsoïdale, le fond (1) et/ou au moins une paroi latérale (2) étant perméables au gaz et au liquide ; et
une pluralité de cheminées (3, 4) sensiblement verticales et ouvertes à leurs extrémités inférieures (5) et supérieures (6), chaque cheminée comprenant une partie inférieure (7) comprenant l'extrémité inférieure (5) fixée sur le fond (1) et s'étendant entre les parois latérales (2),
dans lequel
une première cheminée (3) du panier amovible comprend une partie supérieure (8) s'étendant au-dessus des parois latérales (2), et
la partie supérieure (8) de la première cheminée (3) est adaptée à être introduite dans une partie inférieure (7) d'une cheminée d'un autre panier amovible du même type.

2. Panier amovible selon la revendication 1, dans lequel la hauteur (h1) de la partie supérieure (8) de la première cheminée (3) est plus petite ou égale à la hauteur (H2) de la partie inférieure (7) d'une deuxième cheminée (4) du panier amovible.

3. Panier amovible selon la revendication 1 ou la revendication 2, dans lequel les cheminées (3, 4) forment des tubes à sections circulaires, et le diamètre (D2) de la partie inférieure (7) d'une deuxième cheminée (4) du panier amovible est supérieur au diamètre (d1) de la partie supérieure (8) de la première cheminée (3).

4. Panier amovible selon l'une quelconque des revendications précédentes, comprenant en outre une deuxième cheminée (4) comprenant une partie supérieure (8) s'étendant au-dessus des parois latérales (2), et dans lequel la partie supérieure (8) de la deuxième cheminée (4) est adaptée à être introduite dans une partie inférieure (7) d'une cheminée d'un autre panier amovible.

5. Panier amovible selon la revendication 4, dans lequel la hauteur (h2) de la partie supérieure (8) de la deuxième cheminée (4) est plus petite ou égale à la hauteur (H1) de la partie inférieure (7) de la première cheminée (3).

6. Panier amovible selon la revendication 4, dans lequel les cheminées (3, 4) forment des tubes à section circulaire, et dans lequel le diamètre (D1) de la partie inférieure (7) de la première cheminée (3) est supérieur au diamètre (d2) de la partie supérieure (8) de la deuxième cheminée (4).

7. Panier amovible selon l'une quelconque des revendications précédentes, comprenant quatre parois latérales (2) sensiblement verticales, dans lequel deux premières parois latérales (2) opposées sont de largeur (L) sensiblement égale au double de la largeur (l) des deux autres parois latérales (2) pour former un parallélépipède rectangle comprenant une cavité consistant en deux parallélépipèdes rectangles à base carré adjacents, chacune des premières et deuxièmes cheminées (3, 4) étant disposée au centre d'un des parallélépipèdes rectangles à base carré.

8. Panier amovible selon l'une quelconque des revendications précédentes, dans lequel au moins une des extrémités supérieures (6) de la pluralité de cheminées (3, 4) du panier amovible comprend une grille (10).

9. Panier amovible selon l'une quelconque des revendications précédentes, dans lequel le fond (1) et/ou les parois latérales (2) comprennent une armature périphérique (11).

10. Panier amovible selon l'une quelconque des revendications précédentes, comprenant en outre au moins un renfort (13) adapté à rigidifier le panier amovible.

11. Panier amovible selon l'une quelconque des revendications précédentes, comprenant en outre une grille de protection perforée (9) adaptée pour être disposée au-dessus de la couche supérieure de média filtrant (M).

12. Panier amovible selon l'une quelconque des revendications précédentes, comprenant en outre un élément de connexion (14) pour relier une paroi latérale (2) du panier amovible à une paroi latérale (2) d'un panier amovible adjacent.

13. Dispositif de filtration et de distribution d'une phase gazeuse et d'une phase liquide, apte à être disposé en amont d'un lit catalytique fixe (19) d'un réacteur (17) fonctionnant à co-courant descendant de gaz et de liquide, comprenant:
un plateau perforé (16) s'étendant selon un plan horizontal sur lequel sont fixés des moyens de distribution (15) sensiblement verticaux et ouverts à leurs extrémités supérieures (21) et inférieures (22), lesdits moyens de distribution (15) étant munis d'ouvertures (23) sur au moins une fraction de leur hauteur ; et
une pluralité de paniers amovibles selon l'une quelconque des revendications 1 à 12 disposés sur les moyens de distribution (15).

14. Réacteur (17) adapté à fonctionner à co-courant descendant de gaz et de liquide comprenant dans le sens de l'écoulement des fluides :
un lit catalytique fixe (19) ; et
un dispositif de filtration et de distribution d'une phase gazeuse et d'une phase liquide selon la revendication 13 agencé en amont du lit catalytique (19).

15. Procédé d'hydrotraitement et/ou d'hydrocraquage d'une charge hydrocarbonée contenant au moins une fraction d'hydrocarbures ayant une teneur en soufre d'au moins 0,5% en poids par rapport au poids total de la charge hydrocarbonée, et/ou une température initiale d'ébullition d'au moins 300°C, et/ou une température finale d'ébullition d'au moins 500°C, dans lequel on introduit la charge dans un réacteur selon la revendication 14.
